# EUROPÄISCHE PATENTSCHRIFT

(11) **EP 3 506 723 B1**
(45) Veröffentlichungstag und Bekanntmachung des Hinweises auf die Patenterteilung: **21.12.2022**
(21) Anmeldenummer: 17211061.1
(22) Anmeldetag: 29.12.2017
(51) Int. Cl.: H05B 45/48, H05B 45/3725

(54) **SCHALTWANDLER ZUM SPEISEN EINER LED-SERIENSCHALTUNG**
SWITCHING CONVERTER FOR FEEDING AN LED SERIES CIRCUIT
CONVERTISSEUR À DÉCOUPAGE PERMETTANT D'ALIMENTER UN MONTAGE EN SÉRIE COMPOSÉ DE DIODES ÉLECTROLUMINESCENTES

(43) Veröffentlichungstag der Anmeldung: 03.07.2019
(73) Patentinhaber: ZKW Group GmbH, 3250 Wieselburg (AT)
(72) Erfinder: Petsch, Daniel, 3292 Gaming (AT)
(74) Vertreter: Patentanwaltskanzlei Matschnig & Forsthuber OG

(56) Entgegenhaltungen:
- US-A1- 2017 066 366
- Melexis: "FACT PAGE Power supply/LED drivers", , 1. Juli 2007 (2007-07-01), XP055475434, Gefunden im Internet: URL:https://www.melexis.com/-/media/files/ documents/whitepapers/power-supply-led-dri vers-whitepaper-melexis.pdf [gefunden am 2018-05-16]

## Beschreibung

Die Erfindung bezieht sich auf ein System aufweisend eine LED-Serienschaltung mit einer ersten und einer zweiten Anzahl von in Serie geschalteten LEDs, und einen Schaltwandler zum Speisen der LED-Serienschaltung gemäß dem Oberbegriff von Anspruch 1.

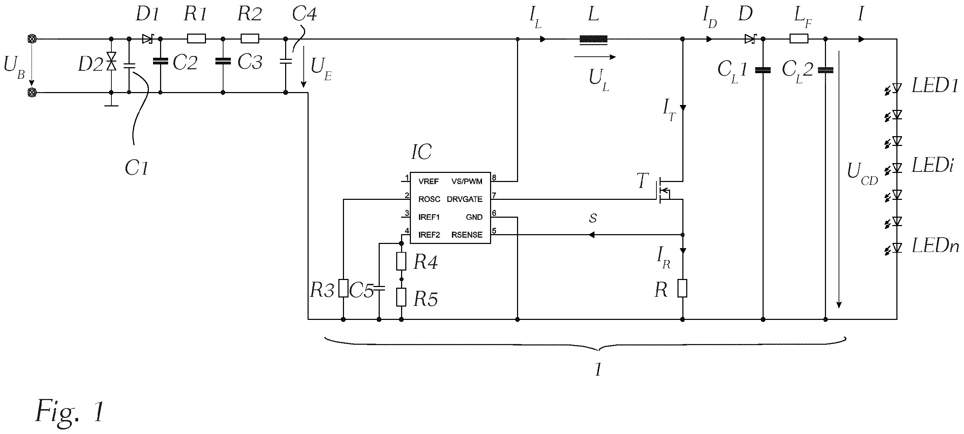

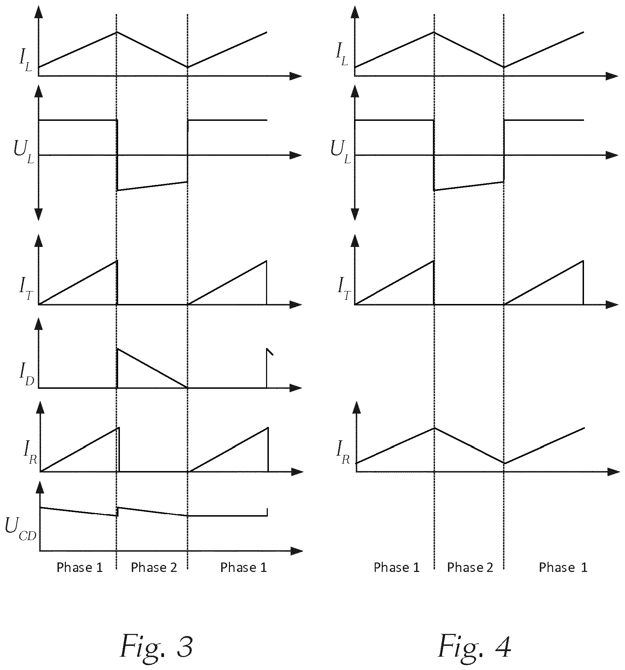

Schaltwandler dieser Art gehören dem Stand der Technik an. Der Aufbau einer beispielsweisen Ausführung einer entsprechenden Schaltung und deren Funktion sind weiter unten an Hand der Fig. 1 und Fig. 3 beschrieben. Weiters sind aus den Dokumenten "FACT PAGE Power supply/LED drivers" von Melexis, 1. Juli 2007 (2007-07-01), XP 055475434 sowie aus der US 2017 066366 A1 Schaltwandler bekannt geworden.

Schaltwandler der gegenständlichen Art nach dem Stand der Technik benötigen nicht nur eine Längsinduktivität, sondern auch eine Freilaufdiode und eine Speicherkapazität. Die Kosten für diese Bauteile fallen jedoch bei der Stromversorgung kostengünstiger LED-Anordnungen, beispielsweise aus einem KFZ-Stromnetz, unverhältnismäßig stark ins Gewicht, sodass eine Aufgabe der Erfindung darin liegt, eine einfachere und billigere Lösung für solche Schaltwandler zu finden.

Diese Aufgabe wird mit einem System nach Anspruch 1 gelöst.

Dank der Erfindung können gegenüber dem Stand der Technik vergleichsweise teure Bauteile eingespart werden, sodass ein billiges System umfassend einen Schaltwandler für die Ansteuerung von LED-Serienschaltungen geschaffen wird.

Erfindungsgemäß ist vorgesehen, dass der Stromsensor ein Widerstand ist, welcher den Gesamtstrom durch die LED-Serienschaltung und den Schalttransistor erfasst.

Die Erfindung bzw. der Stand der Technik als Ausgangspunkt der Erfindung sind im Folgenden an Hand von Ausführungsbeispielen unter Bezugnahme auf die Zeichnung näher erläutert. In dieser zeigen
Fig.1 eine beispielsweise Schaltung eines Schaltwandlers nach dem Stand der Technik,
Fig.2 eine Schaltung eines Schaltwandlers nach einem Ausführungsbeispiel der Erfindung,
Fig. 3 den Verlauf wesentlicher Ströme und Spannungen bei dem Schaltwandler nach Fig. 1 und
Fig. 4 den Verlauf wesentlicher Ströme und Spannungen bei dem erfindungsgemäßen Schaltwandler nach Fig. 2.

Es sei vorangestellt, dass zur Vereinfachung und zum Erleichtern der Verständlichkeit in den Figuren für gleiche oder gleichartige Bauteile, Schaltelemente und elektrische Größen gleiche Bezugszeichen verwendet werden.

Nun auf **Fig. 1** Bezug nehmend erkennt man eine Serienschaltung einer Anzahl von LEDs **LED1** bis **LEDn,** allgemein **LEDi,** im vorliegenden Beispiel sieben LEDs. Wenngleich nicht dargestellt, soll der Begriff Serienschaltung von LEDs auch Anordnungen umfassen, bei welchen auch Parallelschaltungen von LEDs in Serie geschaltet sind, was bedeutet, dass an Stelle einer LED, z.B. der LED1 zwei oder mehr parallelgeschaltete LEDs liegen könnten.

Diese Serienschaltung wird von einem Schaltwandler **1** mit einem Strom **I** gespeist, wobei der Eingang des Schaltwandlers an einer Eingangsspannung **U_{E}** liegt, die beispielsweise im Wesentlichen der Batteriespannung **U_{B}** eines Kraftfahrzeuges entspricht. Zwischen der Batteriespannung U_{B} und dem Eingang des Schaltwandlers 1 liegt üblicherweise ein vorgeschaltetes Netzwerk, welches wie hier Filterkondensatoren **C1, C2, C3** und **C4,** Filterwiderstände **R1, R2,** eine Verpolschutzdiode **D1** und einen Überspannungsschutz **D2** enthält.

Der Schaltwandler besitzt eine Längsinduktivität **L,** welche zwischen einem ersten Pol, hier dem Pluspol der Eingangsspannung U_{E}, und einem ersten Anschluss der LED-Serienschaltung LED1...LEDn liegt, wobei der zweite Anschluss der LED-Serienschaltung mit dem zweiten Pol der Eingangsspannung U_{E} verbunden ist. Ein erster Anschluss der Längsinduktivität L liegt an der Eingangsspannung U_{E}, ihr anderer Anschluss führt über eine Freilaufdiode **D** zu einem Ladekondensator **C_{L}1**. Diesem ist über eine Filterdrossel **L_{F}** ein weiterer Kondensator **C_{L}2** nachgeordnet, zu dem parallel die LED-Serienschaltung LED1...LEDn geschaltet ist.

Ein weiteres wesentliches Element des Schaltwandlers ist ein Schalttransistor **T,** welcher von einer PWM-Ansteuerschaltung **IC** angesteuert ist, wobei der Schalttransistor T die Längsinduktivität L über den Stromsensor R periodisch mit dem zweiten Pol der Eingangsspannung U_{E} verbindet. Dieser Ansteuerschaltung IC ist das Signal s eines Stromsensors **R,** hier als ohmscher Widerstand ausgebildet, zugeführt, welcher von dem Strom **I_{T}** durch den Schalttransistor durchflossen ist und der ein diesem Strom proportionales Spannungssignal abbildet. Die Ansteuerschaltung IC, die beispielsweise ein unter der Bezeichnung MLX10803, high power LED Driver der Firma Melexis^{®} erhältliches, handelsübliches Produkt ist, ist außen mit drei Widerständen R3, R4, R5 und einem Kondensator C5 beschaltet, wobei die Widerstände R4 und R5 im Wesentlichen eine interne Referenzspannung zum Vergleich mit dem der Ansteuerschaltung zugeführten Signal s festlegen. Wenn die Spannung an dem Stromsensor R - Signal s - größer als die Referenzspannung, bei dem gegenständlichen Baustein größer als die halbe Referenzspannung ist, wird der Schalttransistor T geöffnet, ist sie kleiner, so wird der Transistor T durchgeschaltet.

Nun wird unter Bezugnahme auch auf **Fig. 3** die Funktion dieses bekannten Schaltwandlers erläutert, um später die Unterschiede zwischen Stand der Technik und der Erfindung besser hervorheben zu können.

In einer ersten Phase ("Phase1") schaltet der Transistor T durch und legt die Längsinduktivität L an die Eingangsspannung U_{E}. Durch die Längsinduktivität fließt ein linear ansteigender Strom **I_{L}** und im Magnetfeld der Längsinduktivität wird Energie gespeichert. Die Freilaufdiode D sperrt, da an der Kathode die Spannung höher ist als an der Anode. In dieser Phase wird der Strom **I** für die LEDs LED1...LEDn aus den Kondensatoren C_{L}1 und C_{L}2 entnommen. Sobald der Ladestrom den maximal festgelegten Strom durch die Längsinduktivität L, der mit Hilfe des Stromsensors R gemessen wird, erreicht hat, wird der Transistor T abgeschaltet.

In einer zweiten Phase ("Phase2") steigt nach Sperren des Transistors T die Spannung an der Freilaufdiode D sofort auf Höhe der Eingangsspannung U_{E}. Die Freilaufdiode D sperrt noch immer, da die Spannung an der Kathode noch höher ist als an der Anode. Da kein Strom mehr fließt bricht das Magnetfeld in der Längsinduktivität L zusammen und induziert eine hohe Spannung, die sich zu der Eingangsspannung U_{E} addiert. Da die beiden Kondensatoren C_{L}1 und C_{L}2 in der Phase 1 teilweise entladen wurden, ist die Spannung an der Kathode der Diode D niedriger als die nun sehr hohe Spannung an der Anode. Die Diode D wird sofort leitend und lädt C auf die um die Induktionsspannung aufgestockte Eingangsspannung U_{E} auf. Mit dem erneuten Durchschalten des Transistors T sperrt die Freilaufdiode D wieder und eine neue Ladephase beginnt.

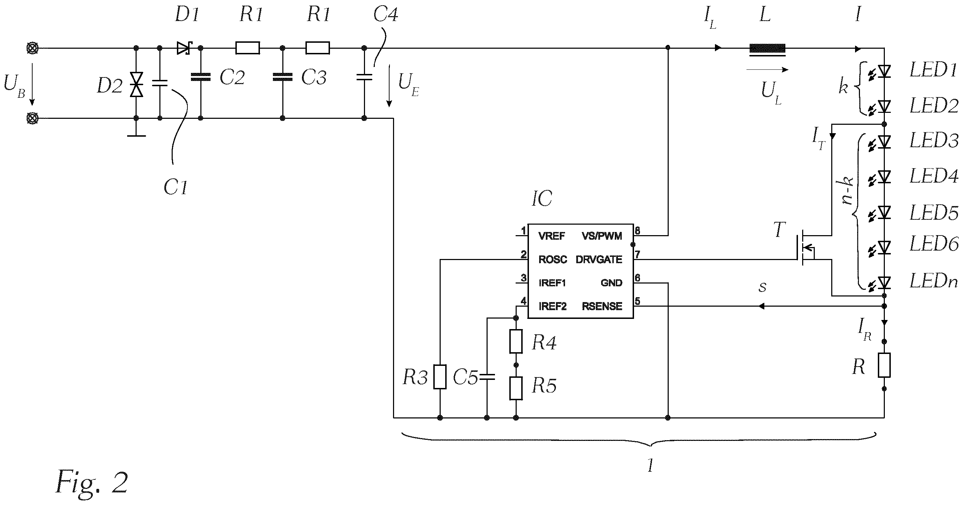

Nun wird auf **Fig. 2** Bezug genommen, welche eine Ausführungsform eines erfindungsgemäßen Schaltwandlers zeigt. Eingangsseitig, einschließlich der Ansteuerschaltung IC und der Längsinduktivität L entspricht der Schaltwandler jenem nach Fig. 1 entsprechend dem Stand der Technik. Es entfallen jedoch die Freilaufdiode, der Ladekondensator, die Filterdrossel und der weitere Kondensator. Die Längsinduktivität L ist vielmehr unmittelbar mit dem einen Anschluss der Serienschaltung der LEDs LED1...LEDn verbunden.

Die Schaltstrecke des Transistors T liegt, wieder unter Zwischenschaltung des Stromsensors R, einerseits an dem zweiten Pol der Eingangsspannung U_{E} und andererseits am Verbindungspunkt der ersten k LEDs, hier mit k=2 der LED1 und der LED2. Die Schaltstrecke des Transistors T überbrückt somit die restlichen LEDs, hier mit n=7 und n-k=5, somit die LED3 bis LED7. Der Schalttransistor T verbindet die Längsinduktivität L periodisch mit dem zweiten Pol der Eingangsspannung bei der Erfindung unter Zwischenschaltung der ersten k LEDs LED1 und LED2. Dies ist ein weiterer wesentlicher Unterschied gegenüber dem Stand der Technik.

Man erkennt bei einem Vergleich der Fig. 1 mit Fig. 2, dass bei der Erfindung die Ladekondensatoren C_{L}1 und C_{L}2 der Fig. 1 entfallen, welche dort zum Zwischenspeichern der Energie notwendig sind, damit die LEDs auch während der Phase 1 leuchten. Ebenso entfällt die Freilaufdiode D und die Filterdrossel L_{F} der Fig. 1.

Natürlich kann der Stromsensor R auch an einer anderen Stelle der Serienschaltung von Längsinduktivität und LEDs liegen, um einer bestimmten Bauart der Ansteuerschaltung IC, entgegenzukommen.

Nun wird auf **Fig. 4** Bezug genommen, um - zusammen mit Fig. 2 - die Funktion des Schaltwandlers nach der Erfindung zu erläutern.

In einer ersten Phase ("Phase1") schaltet der Transistor T durch und legt die Längsinduktivität L und die ersten k LEDs, LED1 und LED2, an die Eingangsspannung U_{E}.

Durch die Längsinduktivität L fließt ein linear ansteigender Strom und in ihrem Magnetfeld wird Energie gespeichert. In dieser Phase leuchten nur die ersten k, hier zwei LEDs und durch die restlichen (n-k), hier fünf LEDs fließt kein Strom. Sobald der Ladestrom den maximal festgelegten Strom durch die Längsinduktivität L, der mit Hilfe des Stromsensors R gemessen wird, erreicht hat, wird der Transistor T abgeschaltet.

In der zweiten Phase ("Phase 2") steigt nach Sperren des Transistors T die Spannung an der LED-Serienschaltung LEDs LED1...LEDn sofort auf Höhe der Eingangsspannung U_{E}. Da an den sieben bzw. n LEDs eine höhere Spannung als die Eingangsspannung U_{E} liegt, fließt kein Strom. Das Magnetfeld in der Längsinduktivität L bricht, da kein Strom mehr fließt, zusammen und induziert eine hohe Spannung, die sich zu der Eingangsspannung addiert. Die LEDs beginnen zu leuchten da die Eingangsspannung U_{E} und die durch Induktion in der Längsinduktivität erzeugte Spannung hoch genug ist, sodass demnach durch die LEDs ein Strom fließt, bis die in der Längsinduktivität L gespeicherte Energie aufgebraucht ist und die LEDs nicht mehr leuchten. Mit dem erneuten Durchschalten des Transistors T beginnt wiederum die Phase 1.

Was die Anzahl der LEDs und die Dimensionierungsgrundsätze betrifft, so müssen die k LEDs, hier LED1 und LED2, die über den Transistor T in Phase 1 an die Eingangsspannung UE gelegt werden, eine geringere Flussspannung aufweisen, als die minimal mögliche Betriebsspannung. Für die restlichen n-k LEDs, hier die fünf LEDs LED3...LEDn mit n=7, gilt, dass deren Anzahl im Prinzip beliebig sein kann, jedoch muss die Anzahl zumindest so groß sein, dass die maximale Betriebsspannung UE niedriger ist, als die Flussspannung sämtlicher, hier sieben, LEDs.

Bei einem praktischen Beispiel möge die Betriebsspannung UB zwischen 9 und 16 Volt betragen und die Flussspannung der LEDs möge zwischen 2,5 und 3,5 Volt liegen. Dann liegt in Phase 1 die Spannung an der Serienschaltung der LEDs zwischen 5 und 7 Volt und in Phase 2 zwischen 17,5 und 24,5 Volt.

Es soll darauf hingewiesen werden, dass bei Verwendung eines erfindungsgemäßen Schaltwandlers die Helligkeit der n-k LEDs LED3...LEDn in der "Phase 2" naturgemäß geringer ist, als die Helligkeit der k LEDs LED1, LED2 in "Phase1", doch hat sich gezeigt, dass dies in der Praxis kaum eine Rolle spielt. Überdies könnte man diesen Umstand durch Verwendung unterschiedlicher LED-Typen berücksichtigen.

Da bei der Erfindung die Ladekondensatoren entfallen, ist auch keine Filterdrossel mehr erforderlich und die elektromagnetischen Störungen werden geringer, da in der Schaltung keine Ströme mit steilen Flanken fließen. Wegen des Entfalls der Ladekondensatoren ist auch die Freilaufdiode nicht mehr erforderlich.

### Liste der Bezugszeichen

- 1: Schaltwandler
- C1...C4: Filterkondensatoren
- C_{L}1: Ladekondensator
- C_{L}2: Kondensator
- C5: Kondensator
- D: Freilaufdiode
- D1: Verpolschutzdiode
- D2: Überspannungsschutz
- IC: Ansteuerschaltung
- I: Strom durch Serienschaltung
- I_{D}: Strom durch Diode
- I_{L}: Strom durch Längsinduktivität
- I_{T}: Strom durch den Schalttransistor
- LEDi: Leuchtdioden
- L: Längsinduktivität
- L_{F}: Filterdrossel
- R: Stromsensor
- R1, R2: Filterwiderstände
- R3...R5: Widerstände
- s: Signal
- T: Schalttransistor
- U_{B}: Betriebsspannung
- U_{CD}: Spannung
- U_{E}: Eingangsspannung

## Patentansprüche

1. System aufweisend,
• eine LED-Serienschaltung (LED1 ... LEDn) mit einer ersten (k) und einer zweiten (n-k) Anzahl von in Serie geschalteten LEDs, und
• einen Schaltwandler (1) zum Speisen der LED-Serienschaltung (LED1...LEDn), der Schaltwandler (1) aufweisend
∘ einen ersten und einen zweiten Pol zum Anlegen einer Eingangsspannung (U_{E}),
∘ eine Längsinduktivität (L),
∘ einen als ohmschen Widerstand ausgebildeten Stromsensor (R),
∘ eine PWM-Ansteuerschaltung (IC),
∘ einen Schalttransistor (T),
wobei ein erster Anschluss der Längsinduktivität (L) mit dem ersten Pol verbunden ist und ein weiterer Anschluss der Längsinduktivität (L) mit einem ersten Anschluss der LED-Serienschaltung (LED1 ... LEDn) verbindbar ist, wobei ein zweiter Anschluss der LED-Serienschaltung (LED1 ... LEDn) über den als ohmschen Widerstand ausgebildeten Stromsensor (R) mit dem zweiten Pol verbunden ist, wobei der Schalttransistor (T) von der PWM-Ansteuerschaltung (IC) angesteuert ist, wobei der PWM-Ansteuerschaltung (IC) ein Signal des als ohmscher Widerstand ausgebildeten Stromsensors (R) zugeführt ist, wobei der als ohmsche Widerstand ausgebildete Stromsensor (R) zur Erfassung eines Gesamtstroms durch die LED-Serienschaltung (LED1 ... LEDn) und den Schalttransistor (T) ausgebildet ist, und wobei die PWM-Ansteuerschaltung (IC) in Abhängigkeit von dem zugeführten Signal den Schalttransistor (T) schaltet,
**dadurch gekennzeichnet, dass**
der weitere Anschluss der Längsinduktivität (L) direkt mit dem ersten Anschluss der LED-Serienschaltung (LED1...LEDn) verbunden ist, und der Schaltwandler derart ausgebildet ist, dass die erste Anzahl (k) von LEDs (LED1, LED2) von einer Schaltstrecke des Schalttransistors (T) nicht überbrückbar ist, wobei die zweite Anzahl (n-k) der LEDs (LED3 ... LEDn) mittels der Schaltstrecke des Schalttransistors (T) überbrückbar ist, wobei der Schalttransistor (T) entsprechend dem Signal der PWM-Ansteuerschaltung (IC) den weiteren Anschluss der Längsinduktivität (L) periodisch über die erste Anzahl (k) von LEDs (LED1, LED2) und den als ohmschen Widerstand ausgebildeten Stromsensor (R) mit dem zweiten Pol verbindet, wobei eine Flussspannung der ersten Anzahl (k) von LEDs (LED1, LED2) geringer ist, als die minimal mögliche Betriebsspannung (U_{B}) des Schaltwandlers (1).

## Claims

1. System comprising,
- an LED series circuit (LED1 ... LEDn) having a first (k) and a second (n-k) number of LEDs connected in series, and
- a switching converter (1) for powering the LED series circuit (LED1...LEDn), the switching converter (1) comprising
o a first and a second pole for applying an input voltage (UE),
o a longitudinal inductance (L),
o a current sensor (R) formed as an ohmic resistor,
o a PWM drive circuit (IC),
∘ a switching transistor (T),
wherein a first terminal of the longitudinal inductance (L) is connected to the first pole and a further terminal of the longitudinal inductance (L) can be connected to a first terminal of the LED series circuit (LED1 ... LEDn), wherein a second terminal of the LED series circuit (LED1 ... LEDn) is connected to the second terminal via the current sensor (R), which is in the form of an ohmic resistor, the switching transistor (T) being driven by the PWM drive circuit (IC), the PWM drive circuit (IC) being supplied with a signal from the current sensor (R), which is in the form of an ohmic resistor, the current sensor (R), which is in the form of an ohmic resistor, being used to detect a total current through the LED series circuit (LED1 ... LEDn) and the switching transistor (T). LEDn) and the switching transistor (T), and the PWM drive circuit (IC) switching the switching transistor (T) as a function of the signal supplied,
**characterized in that**
the further terminal of the longitudinal inductance (L) is directly connected to the first terminal of the LED series circuit (LED1...LEDn), and the switching converter is designed in such a way that the first number (k) of LEDs (LED1, LED2) cannot be bridged by a switching path of the switching transistor (T), the second number (n-k) of LEDs (LED3 ... LEDn) can be bridged by means of the switching path of the switching transistor (T), the switching transistor (T), in accordance with the signal of the PWM drive circuit (IC), periodically connecting the further terminal of the series inductance (L) via the first number (k) of LEDs (LED1, LED2) and the current sensor (R) formed as an ohmic resistor to the second pole, wherein a forward voltage of the first number (k) of LEDs (LED1, LED2) is lower than the minimum possible operating voltage (UB) of the switching converter (1).

## Revendications

1. Système comprenant,
- un circuit série de LED (LED1 ... LEDn) avec un premier (k) et un deuxième (n-k) nombre de LED connectées en série, et
- un convertisseur de commutation (1) pour alimenter le circuit série de LED (LED1...LEDn), le convertisseur de commutation (1) comprenant
∘ un premier et un deuxième pôle pour l'application d'une tension d'entrée (UE),
∘ une inductance longitudinale (L),
∘ un capteur de courant (R) conçu comme une résistance ohmique,
∘ un circuit de commande PWM (IC),
∘ un transistor de commutation (T),
une première borne de l'inductance longitudinale (L) étant reliée au premier pôle et une autre borne de l'inductance longitudinale (L) pouvant être reliée à une première borne du circuit sériel à LED (LED1 ... LEDn), une deuxième borne du circuit sériel à LED (LED1 ... LEDn) pouvant être reliée à une deuxième borne du circuit sériel à LED (LED1 ... LEDn). LEDn) est relié au deuxième pôle par l'intermédiaire du capteur de courant (R) réalisé sous la forme d'une résistance ohmique, le transistor de commutation (T) étant commandé par le circuit de commande PWM (IC), un signal du capteur de courant (R) réalisé sous la forme d'une résistance ohmique étant amené au circuit de commande PWM (IC), le capteur de courant (R) réalisé sous la forme d'une résistance ohmique étant utilisé pour détecter un courant total à travers le circuit sériel LED (LED1 ... LEDn) et le transistor de commutation (T), et le circuit de commande PWM (IC) commutant le transistor de commutation (T) en fonction du signal amené,
**caractérisé en ce que**
l'autre borne de l'inductance longitudinale (L) est reliée directement à la première borne du circuit série de LED (LED1...LEDn), et le convertisseur de commutation (1) est conçu de telle sorte que le premier nombre (k) de LED (LED1, LED2) ne peut pas être ponté par un trajet de commutation du transistor de commutation (T), le deuxième nombre (n-k) de LED (LED3 ... LEDn) peut être ponté au moyen de la section de commutation du transistor de commutation (T), le transistor de commutation (T) commutant périodiquement, en fonction du signal du circuit de commande PWM (IC), l'autre connexion de l'inductance longitudinale (L) par l'intermédiaire du premier nombre (k) de LED (LED1, LED2) et le capteur de courant (R) réalisé sous forme de résistance ohmique au deuxième pôle, une tension de flux du premier nombre (k) de LED (LED1, LED2) étant inférieure à la tension de service (UB) minimale possible du convertisseur de commutation (1).
